# EUROPÄISCHE PATENTSCHRIFT

(11) **EP 0 529 464 B1**
(45) Veröffentlichungstag und Bekanntmachung des Hinweises auf die Patenterteilung: **22.02.1995**
(21) Anmeldenummer: 92114015.8
(22) Anmeldetag: 17.08.1992
(51) Int. Cl.: B01D 17/025

(54) **Fett- und Grobschmutzabscheider**
Separator for fat and course dirt
Séparateur de matières grasses et d'impuretés grossières

(30) Priorität: 23.08.1991 DE 4128406
(43) Veröffentlichungstag der Anmeldung: 03.03.1993
(73) Patentinhaber: Marcegaglia, Werner, D-58285 Gevelsberg (DE)
(72) Erfinder: Marcegaglia, Werner, D-58285 Gevelsberg (DE)
(74) Vertreter: Dörner, Lothar, Dipl.-Ing.

(56) Entgegenhaltungen:
- DE-U- 8 901 335
- FR-A- 1 280 083
- FR-A- 2 171 122
- GB-A- 2 228 751
- US-A- 4 472 277

## Beschreibung

Die Erfindung betrifft einen transportablen Fett- und Grobschmutzabscheider mit einem Behälter, der durch Trennwände, von denen jede mit einer Durchlauföffnung versehen ist, in mindestens zwei Kammern getrennt ist, und bei dem in der ersten Kammer ein Zulauf für Fett und Grobschmutz enthaltendes Wasser in der Form eines vertikalen Tauchrohrs mündet sowie von der letzten Kammer ein Ablauf für das gereinigte Wasser in der Form eines eine der Seitenwände des Behälters horizontal durchsetzenden Ablaufrohrs ausgeht, dessen Einlaßoffnung von einem nur an der Unterseite offenen Innenkasten umgeben ist.

Bei Volksfesten und größeren Feiern werden mobile Großküchen und Restaurants eingesetzt, die für die Beköstigung der Gäste größere Mengen Geschirr benötigen Soweit das Geschirr nicht aus Kunststoff besteht - was wegen des Umweltschutzes zunehmend der Fall ist -, muß es nach Benutzung gespült werden, wofür u.a. besondere Spülmobile eingesetzt werden. Das für das Spülen notwendige Wasser fließt dabei mit Fett und Grobschmutz angereichert ungereinigt in die Kanalisation. Um dies zu vermeiden, werden mobile Fett- und Grobschmutzabscheider eingesetzt.

Ein Abscheider der eingangs genannten Art ist aus US-A-4 472 277 bekannt. Bei dem bekannten Abscheider sind Ein- und Auslaß in derselben Stirnwand des Behälters vorgesehen und auf die gleiche Art und Weise ausgebildet. Ein dem Ablaufrohr vorgeordneter Kanal reicht verhältnismäßig tief auf den Behälterboden herunter. Die Trennwand durchsetzt den Behälter in Längsrichtung. Die Durchlauföffnung beginnt am Behälterboden; sie ist im Bereich der von Zu- und Ablauf entgegengesetzten Stirnwand vorgesehen. Mit dem bekannten Abscheider ist es nicht, jedenfalls nur schwer möglich, Sinkstoffe ordnungsgemäß zu trennen, da der Behälterboden Teil der Durchlauföffnung ist. Da andererseits der Kanal für den Ablauf bis relativ nahe an den Behälterboden heranreicht, besteht die Gefahr, daß Sinkstoffe, die ungehindert die Durchlauföffnung von der einen in die andere Kammer passieren können, die Eintrittsöffnung für den Ablauf zusetzen.

Aus FR-A-1 280 083 ist weiterhin ein Abscheider bekannt, der als Entölungskessel ausgebildet und stationär eingebauter Bestandteil von z.B. Waschhäusern oder Garagen ist. Unterhalb der Decke des Abscheiders mündet in der ersten Kammer ein horizontal eine der Seitenwände durchsetzendes Rohr, über das das verschmutzte Wasser zugeführt wird. Die die erste Kammer begrenzende Trennwand enthält im Abstand vom Behälterboden eine Durchlauföffnung, außerdem eine Rinne, die Wasserbewegungen glätten soll. Der Ablauf ist von einem Rohrknie gebildet, dessen Ablaufschenkel horizontal etwa in Höhe des Zulaufrohres eine andere Seitenwand durchsetzt dessen anderer Schenkel unterhalb der Durchlauföffnung von der zweiten in die dritte Kammer endet. Der gesamte Abscheider ist von einem Stopfen verschlossen.

Die in den Patentansprüchen beschriebene Erfindung löst die Aufgabe, das von dem genannten stationären Abscheider bekannte Prinzip der Wasserreinigung bei einem transportablen Abscheider zu realisieren; also den transportablen Abscheider der eingangs genannten Art so auszubilden, daß nicht nur Fett, das auf der Oberfläche des Wassers schwimmt, sondern auch Sinkstoffe von dem Wasser getrennt werden, sodaß letztere nicht den Ablauf zusetzen können.

Bei der Erfindung sind Zufluß und Ablauf im Bereich der entgegengesetzten Stirnseiten des Behälters angeordnet. Während das Tauchrohr für den Zufluß bis relativ nahe an den Behälterboden heranreicht, ist der Ablauf mit seiner Eintrittsöffnung deutlich oberhalb des Bodens angeordnet. Wesentlich ist, daß die Durchtrittsöffnung zwischen den Kammern mit ihrer Unterkante nicht am Boden beginnt, sondern im Abstand davon. Das hat zur Folge, daß Sinkstoffe praktisch in der ersten Kammer gesammelt werden. Falls sie doch mit dem Wasser in die zweite Kammer gelangen, bleiben sie am Boden. Die Gefahr, daß die Sinkstoffe die Einlaßöffnung des Ablaufs zusetzen, besteht nicht. Hierfür sind maßgeblich einmal die Anordnung der Durchtrittsöffnung in der Trennwand, zum anderen die Lage der Austrittsöffnung des Tauchrohres für das zu reinigende Wasser sowie die der Öffnung für den Ablauf. Die Ausgestaltung des Tauchrohrs ermöglicht die weitgehend turbulenzfreie Einbringung des mit Fett- und Grobschmutz versehenen Wassers; die des Ablaufs gewährleistet das Ausbringen des gereinigten Wassers ohne das an seiner Oberfläche schwimmende Fett.

Der Fett- und Grobschmutzabscheider nach der Erfindung kann bei allen mobilen Großküchen und Restaurants, z.B. in Verbindung mit Spülmobilen, bei Volksfesten und größeren Feiern eingesetzt werden. Er ist - leer - von Ort zu Ort transportabel. Für den Abscheider kann ein Behälter mit einem Mehrkammersystem verwendet werden. Es hat sich gezeigt, daß ein Zweikammersystem ausreicht. Mit dem Fett- und Grobschmutzabscheider nach der Erfindung wird das Wasser gereinigt, bevor es in die Kanalisation fließt. Es wird verhindert, daß Abwasserkanäle und Kläranlagen sowie Abwasserrohre in Häusern unnötig belastet werden.

In Weiterbildung der Erfindung sind außen an dem Behälter an wenigstens zwei gegenüberliegenden Seitenwänden Transportlaschen und am Boden Aufstellfüße vorgesehen. Diese Weiterbildung erleichtert, zusammen mit den wählbaren Abmessungen des Behälters, die Mobilität des Abscheiders.

In einer anderen Weiterbildung ist der Behälter von einem seine gesamte Grundfläche überspannenden, an der oberen Kante des Behälters unter Zwischenfügung einer Dichtung aufliegenden und mit Hilfe von Spannverschlüssen befestigten Deckel verschlossen. Diese Weiterbildung erleichtert das Entleeren und die Reinigung des Behälters, bevor er von einem an einen anderen Ort gebracht wird.

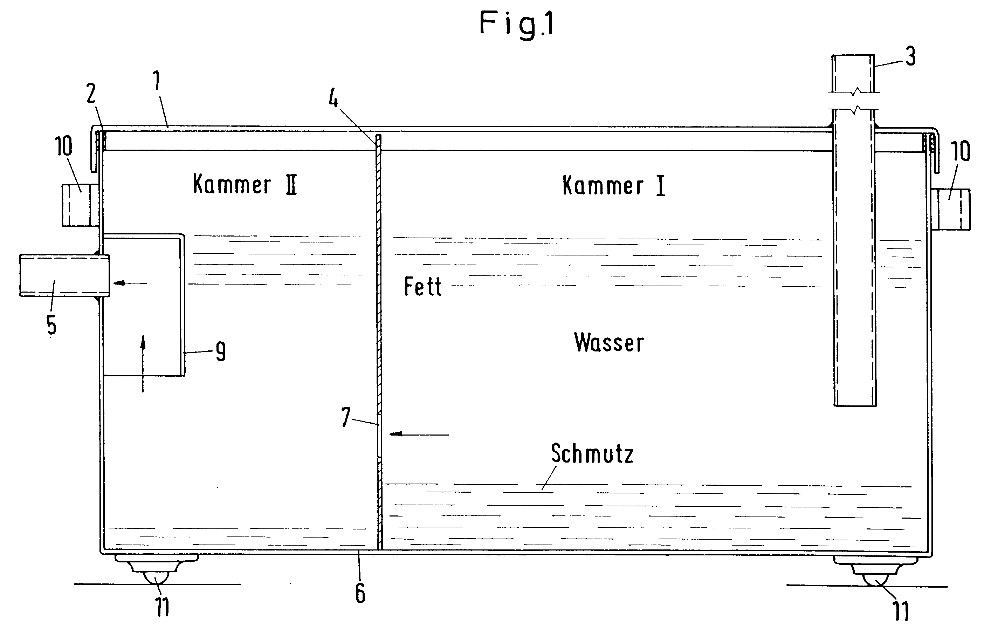

Ein Ausführungsbeispiel der Erfindung ist in der Zeichnung dargestellt und wird nachfolgend im einzelnen beschrieben. Es zeigen in schematischer Darstellung
- Fig. 1: einen Längsschnitt durch einen Fett- und Grobschmutzabscheider;

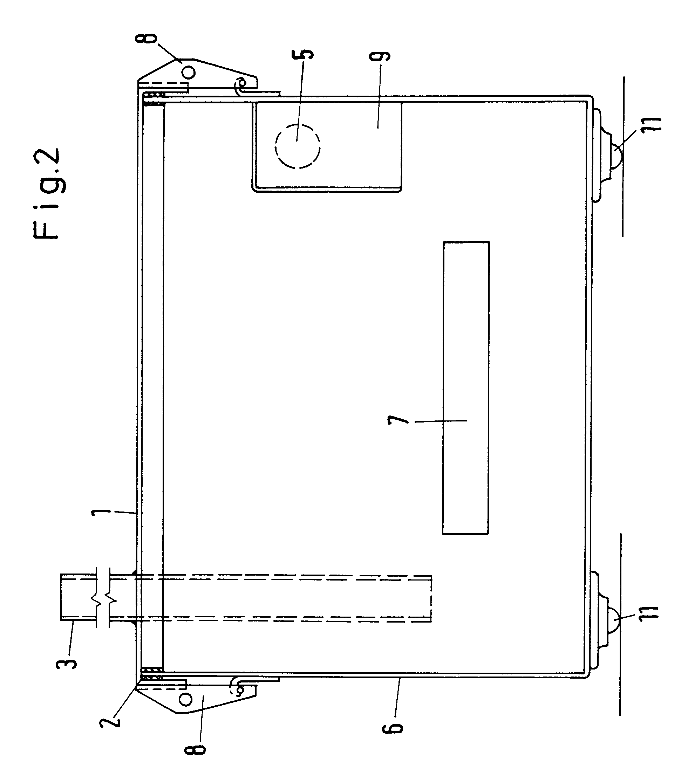

- Fig. 2: den in Fig. 1 dargestellten Abscheider in einem Querschnitt.

Der als Ausführungsbeispiel gewählte mobile Fett- und Grobschmutzabscheider weist einen Behälter 6 mit einem Zweikammersystem auf. Schmutzwasser von Spülmaschinen, Spülbecken o. dgl. wird über ein vertikales Tauchrohr 3 in eine Kammer I des Behälters 6 eingebracht. Hier trennen sich Grobschmutz, der nach unten sinkt, und Fett, das auf der Oberfläche des Wassers schwimmt, vom Wasser. Das so schon von Schmutz und Fett weitgehend gereinigte Wasser läuft durch einen rechteckigen Durchlauf 7, der in einer Trennwand 4 vorgesehen ist, in eine Kammer II. Von dem in Kammer I bereits vorgereinigten Wasser werden in der Kammer II restliche Fett- und Grobschmutzteilchen auf die geschilderte Weise getrennt. Das so nachgereinigte Wasser verläßt den Behälter 6 über ein horizontales Ablaufrohr 5. In Höhe des Ablaufrohrs 5 ist innen an der Wandung des Behälters 6 ein Innenkasten 9 vorgesehen. Der Innenkasten 9 ist abgesehen von seiner untersten Fläche allseits geschlossen. Die unterste Fläche des Innenkastens 9 liegt unterhalb der Unterkante der Einlaßöffnung des Ablaufrohres 5.

Außen sind an dem Behälter 6 an wenigstens zwei gegenüberliegenden Seitenwänden Transportlaschen 10 und am Boden Aufstellfüße 11 vorgesehen.

Zum Entleeren und Säubern der Kammern I und II ist ein Deckel 1 vorgesehen. Der Deckel 1 überspannt die gesamte Grundfläche des Behälters 6. Der Deckel 1 liegt an der oberen Kante des Behälters 6 unter Zwischenfügung einer Dichtung 2 auf. Mit Hilfe von Spannverschlüssen 8, die an Seitenwänden des Behälters 6 befestigt sind, wird der Deckel 1 verschlossen. Der Deckel 1 ist von dem Tauchrohr 3 durchsetzt.

Die Durchlauföffnung 7 in der Trennwand 4 ist in Höhe der inneren Stirnfläche des Tauchrohres 3, das ist die Auslauföffnung, etwa im unteren Drittel des Behälters 6 angeordnet. Die freie Unterseite des Innenkastens 9 ist oberhalb der Durchlauföffnung 7 und der inneren Stirnfläche des Tauchrohres 3 angeordnet, nämlich etwa in halber Höhe des Behälters 6.

## Patentansprüche

1. Transportabler Fett- und Grobschmutzabscheider mit einem Behälter (6), der durch Trennwände (4), von denen jede mit einer Durchlauföffnung (7) versehen ist, in mindestens zwei Kammern (I;II) getrennt ist, und bei dem in der ersten Kammer (I) ein Zulauf für Fett- und Grobschmutz enthaltendes Wasser in der Form eines vertikalen Tauchrohrs (3) mündet sowie von der letzten Kammer (II) ein Ablauf für das gereinigte Wasser in der Form eines eine der Seitenwände des Behälters (6) horizontal durchsetzenden Ablaufrohrs (5) ausgeht, dessen Einlaßöffnung von einem nur an der Unterseite offenen Innenkasten (9) umgeben ist, dadurch gekennzeichnet, daß die Durchlauföffnung (7) in jeder Trennwand (4) in Höhe der inneren Stirnfläche des Tauchrohres (3) im unteren Drittel des Behälters angeordnet ist, wobei die Unterkante der Durchlauföffnung (7) im Abstand vom Behälterboden verläuft, daß die von der ersten Kammer (I) abgewandte Seitenwand der letzten Kammer (II) von dem Ablaufrohr (5) durchsetzt ist, und daß die freie Unterseite des Innenkastens (9) des Ablaufrohrs (5) in halber Höhe des Behälters (6) angeordnet ist.

2. Abscheider nach Anspruch 1, dadurch gekennzeichnet, daß außen an dem Behälter (6) an wenigstens zwei gegenüberliegenden Seitenwänden Transportlaschen (10) und am Boden Aufstellfüße (11) vorgesehen sind.

3. Abscheider nach Anspruch 1 oder 2, dadurch gekennzeichnet, daß der Behälter (6) von einem seine gesamte Grundfläche überspannenden, an der oberen Kante des Behälters unter Zwischenfügung einer Dichtung (2) aufliegenden, mit Hilfe von Spannverschlüssen (8) befestigten und von dem Tauchrohr (3) durchsetzten Deckel (1) verschlossen ist.

## Claims

1. Transportable grease and coarse waste trap, having a container (6) which is separated into at least two chambers (I; II) by partition walls (4), each of which is provided with a throughflow opening (7), and wherein there opens into the first chamber (I) an inlet for water containing grease and coarse waste in the form of a vertical immersion pipe (3) and there emanates from the last chamber (II) an outlet for the purified water in the form of an outlet pipe (5), which horizontally penetrates one of the side walls of the container (6) and whose inlet opening is surrounded by an inner box (9) which is open only at its underside, characterized in that the throughflow opening (7) in each partition wall (4) is disposed level with the inner end face of the immersion pipe (3) in the bottom third of the container, the bottom edge of the throughflow opening (7) extending at a distance from the container base, that the side wall of the last chamber (II) remote from the first chamber (I) is penetrated by the outlet pipe (5), and that the clear underside of the inner box (9) of the outlet pipe (5) is disposed halfway up the height of the container (6).

2. Trap according to claim 1, characterized in that at the outside of the container (6) transport brackets (10) are provided on at least two opposing side walls and standing feet (11) are provided on the base.

3. Trap according to claim 1 or 2, characterized in that the container (6) is closed by a lid (1) which covers the entire area of the container, rests with the insertion of a seal (2) on the top edge of the container, is fastened with the aid of toggle-type fasteners (8) and is penetrated by the immersion pipe (3).

## Revendications

1. Séparateur transportable de graisse et de grosses impuretés comportant une cuve (6) qui est divisée en au moins deux chambres (I, II) par des cloisons (4) pourvues chacune d'une ouverture de passage (7), et sur laquelle une arrivée d'eau contenant de la graisse et de grosses impuretés formée d'un tube plongeur vertical (3) débouche dans la première chambre (I) et un départ de l'eau épurée formé d'un tube de départ (5) traversant horizontalement une des parois latérales de la cuve (6) part de la dernière chambre (II), l'orifice d'entrée du tube de départ (5) étant entouré par une boîte intérieure (9) ouverte seulement sur sa face inférieure, caractérisé par le fait que l'ouverture de passage (7) faite dans chaque cloison (4) est placée à la hauteur de l'orifice de sortie du tube plongeur (3) dans le tiers inférieur de la cuve, le bord inférieur de l'ouverture de passage (7) étant situé à une certaine distance du fond de la cuve, que le tube de départ (5) traverse la paroi latérale de la dernière chambre (II) opposée à la première chambre (I), et que la face inférieure ouverte de la boîte intérieure (9) entourant le tube de départ (5) est placée à mi-hauteur de la cuve (6).

2. Séparateur selon la revendication 1, caractérisé par le fait qu'il est prévu extérieurement sur la cuve (6) des pattes de transport (10) sur au moins deux parois latérales opposées et des pieds (11) sur le fond.

3. Séparateur selon l'une des revendications 1 et 2, caractérisé par le fait que la cuve (6) est fermée par un couvercle (1) la couvrant entièrement, reposant sur son bord supérieur par l'intermédiaire d'un joint (2), fixé au moyen de fermetures de serrage (8) et traverse par le tube plongeur (3).
